# EUROPEAN PATENT SPECIFICATION

(11) **EP 3 780 008 B1**
(45) Date of publication and mention of the grant of the patent: **26.07.2023**
(21) Application number: 19776490.5
(22) Date of filing: 25.03.2019
(51) Int. Cl.: H01B 1/12, D06M 15/37, C08G 61/12, C09D 165/00, C09K 11/06

(54) **CONDUCTIVE POLYMER CONDUCTOR, AND METHOD FOR MANUFACTURING SAME**
LEITER AUS LEITFÄHIGEM POLYMER UND VERFAHREN ZU SEINER HERSTELLUNG
CONDUCTEUR POLYMÈRE CONDUCTEUR ET SON PROCÉDÉ DE FABRICATION

(30) Priority: 30.03.2018 JP 2018068637
(43) Date of publication of application: 17.02.2021
(73) Proprietor: AI Silk Corporation, Sendai-shi, Miyagi 980-8579 (JP)
(72) Inventor: OKANO, Hideo, Sendai-shi, Miyagi 980-8579 (JP); OIKAWA, Asuka, Sendai-shi, Miyagi 980-8579 (JP)
(74) Representative: TBK
(86) International application number: PCT/JP2019/012558
(87) International publication number: WO 2019/189009

(56) References cited:
- EP-A1- 2 767 632
- EP-A1- 3 196 350
- EP-A1- 3 228 242
- WO-A1-2016/031872
- WO-A1-2016/148249
- CN-A- 102 168 372
- CN-A- 106 046 390
- JP-A- 2007 273 751
- JP-A- 2014 019 831
- JP-A- 2014 201 843
- JP-A- 2014 233 541
- JP-A- 2014 234 567
- JP-A- 2015 077 414
- JP-A- 2016 121 280
- US-A- 5 691 062
- XIA ET AL: "Fabrication and properties of conductive conjugated polymers/silk fibroin composite fibers", COMPOSITES SCIENCE AND TECHNOLOGY, ELSEVIER, AMSTERDAM, NL, vol. 68, no. 6, 19 December 2007 (2007-12-19), pages 1471-1479, XP022527265, ISSN: 0266-3538, DOI: 10.1016/J.COMPSCITECH.2007.10.044
- ISABELLA S. ROMERO ET AL: "Enhancing the Interface in Silk–Polypyrrole Composites through Chemical Modification of Silk Fibroin", APPLIED MATERIALS & INTERFACES, vol. 5, no. 3, 13 February 2013 (2013-02-13), pages 553-564, XP055390708, US ISSN: 1944-8244, DOI: 10.1021/am301844c
- SHINGO TSUKADA ET AL: "Conductive Polymer Combined Silk Fiber Bundle for Bioelectrical Signal Recording", PLOS ONE, vol. 7, no. 4, 6 April 2012 (2012-04-06), page e33689, XP055769132, DOI: 10.1371/journal.pone.0033689
- XIA YOUYI et al.: "Fabrication and properties of conductive conjugated polymers/silk fibroin composite fibers", Composites Science and Technology, vol. 68, 2008, pages 1471-1479, XP022527265, DOI: 10.1016/j.compscitech.2007.10.044

## Description

### Technical Field

The present invention relates to a conductive polymer conductor that uses a conductive polymer and a method for manufacturing the same.

### Background Art

Conductive polymer fibers with which a conductive polymer, such as PEDOT-PSS {poly(3,4-ethylenedioxythiophene)-poly(styrene sulfonate)} is adhered to a substrate constituted of silk have become known in recent years (see, for example, Patent Literature 1) . These conductive polymer fibers have conductivity, hydrophilicity, tensile strength, and water-resistant strength and can thus be used in particular as a material for bioelectrodes.

### Citation List

### Patent Literature

Patent Literature 1: Japanese Published Unexamined Patent Application No. 2015-77414
Patent Literature 2: CN 106 046 390 A relates to a conductive silk fibroin material and a preparation method thereof, the preparation method mainly comprising the following steps: (1) insoluble treatment of silk fibroin material; (2) 2-((2,3-dihydrothieno[3,4-b] [1,4]dioxene-2-yl)methoxy)acetic acid activation product graft modification of silk fibroin material subjected to insoluble treatment; and (3) in-situ oxidation polymerization of thieno[3,4-b]-1,4-dioxin-2-methanol on silk fibroin material surface subjected to graft modification.
Patent Literature 3: EP 3 196 350 A1 provides an electrically conductive material including a base and a conductive polymer applied uniformly to the base's surface, wherein the electrically conductive material includes PEDOT-pTS, serving as a conductive polymer, applied to the base comprised mostly of silk, wherein a method for producing the electrically conductive material includes the steps of: (1) applying a p-toluenesulfonate (pTS) solution containing an oxidant component and pTS to a base selected from the group consisting of a silk fiber, a fiber containing sericin or fibroin, and a fiber coated or soaked with sericin or fibroin; and (2) further applying 3, 4-ethylenedioxythiophene (EDOT) to the base that already has the oxidant component and pTS applied thereto through the step (1), thereby triggering, at the base, a polymerization reaction to form poly(3,4-ethylene-dioxythiophene)-p-toluenesulfonate (PEDOT-pTS) and applying the formed PEDOT-pTS to the base.
Patent Literature 4: JP 2007 - 273 751 A relates to a solid electrolytic capacitor in which formed positive electrode foil 1 and negative electrode foil 3 are wound via a separator 2, and the separator 2 is allowed to hold conductive polymer, wherein the separator 2 is made of blended paper of paper fiber and cotton.
Patent Literature 5: CN 102 168 372 A relates to a preparation method of a polypyrole-coated collagen-silk fibroin parallel wire conductive composite film, wherein the preparation method comprises the following steps: (1) preparing a pyrrole solution; (2) preparing a polyglutamic acid solution; (3) preparing a ferric chloride solution; (4) preparing a mixture solution of the pyrrole solution and the polyglutamic acid solution; and (5) polymerizing a pyrrole-coated collagen-silk fibroin parallel electrospinning film in situ to obtain the polyglutamic acid-doped polypyrole-coated collagen-silk fibroin parallel wire conductive composite film.
Patent Literature 6: EP 2 767 632 A1 relates to conductive polymer fibers 10, in which a conductor 12 containing a conductive polymer impregnates and/or adheres to base fibers 11, and the aforementioned conductive polymer is PEDOT-PSS.
Patent Literature 7: JP 2014 - 234 567 A relates to a method for manufacturing a conductive fiber comprising: a conductivity addition step of adding conductivity to an insulating base material fiber by immersing the fiber in a predetermined solution including a conductive substance and a diluent solvent to form a conductive fiber; and a drying step of transpiring the diluent solvent included in the conductive fiber by applying a predetermined voltage or current to at least one set of electrodes contacted with the conductive fiber while transporting the conductive fiber to dry the conductive fiber.
Patent Literature 8: JP 2014 - 233 541 A relates to a catheter, which includes a electroconductive composite fiber and comprises a lead wire and an electrode section disposed at the end of the lead wire, wherein the lead wire comprises (i) a conductor including the electroconductive composite fiber which contains an electroconductive polymer, and (ii) an insulator which coats the conductor and contains fluorine-containing polyimide.
Patent Literature 9: WO 2016/148249 A1 relates to a method for producing an electrode element, said method being characterized in that a mixed solution of (1) an organic solvent-based solution containing an oxidative component and p-toluenesulfonate (pTS) and (2) 3,4-ethylenedioxythiophene (EDOT) is brought into contact with a base material to adhere the mixed solution onto the base material and then the contact part is subjected to a polymerization acceleration treatment in synchronization with the contacting; and a biopotential electrode to be applied onto a surface or to be punctured upon use, said biopotential electrode being characterized by comprising the electrode element.
Patent Literature 10: EP 3 228 242 A1 relates to a production device 10 equipped with a heating means 11 for heating a base material M, a raw material application means 12 for applying, to the base material M, a raw material solution containing a monomer of the conductive polymer, and a producing solution application means 13 for applying, to the base material M, a producing solution containing an oxidizing agent for promoting polymerization of the monomer, a dopant for developing electrical conductivity in the conductive polymer, and a viscosity improver for improving viscosity, wherein the raw material solution is applied thereto after heating the base material M or while heating the base material M, and then the producing solution is applied thereto. Non Patent Literature
Non Patent Literature 1: K.E. Aamundtveit et al. "Structure of thin films of poly (3,4-ethylenedioxythiophene)" Synthetic Metals 101(1999)561-564
Non Patent Literature 2: Ioannis Petsagkourakis et al. "Structurally-driven Enhancement of Thermoelectric Properties within poly(3,4-ethylenedioxythiophene) thin Films" SCIENTIFIC REPORTS 6:30501 DOI:10.1038/srep30501 Non Patent Literature 3: Youyi Xia et al. "Fabrication and properties of conductive conjugated polymers/silk fibroin composite fibers" Composites Science and Technology 68(2008)1471-1479
Non Patent Literature 4: Composites Science and Technology 2008, 68, 1471
Non Patent Literature 5: Isabella S. Romero et al. (ACS Appl. Mater. Interfaces 2013, 5, 3, 553-564, developed a strategy to selectively incorporate poly(pyrrole) (Ppy) into constructs made from silk fibroin.
Non Patent Literature 6: Tsukada S, Nakashima H, Torimitsu K (2012, Conductive Polymer Combined Silk Fiber Bundle for Bioelectrical Signal Recording. PLOS ONE 7(4): e33689. https://doi.org/10.1371/journal.pone.00336899) developed and characterized string-shaped electrodes made from conductive polymer with silk fiber bundles (thread), wherein an electroconductive polyelectrolyte, poly(3,4-ethylenedioxythiophene)-poly(styrenesulfonate) (PEDOT-PSS) was electrochemically combined with silk thread made from natural *Bombyx mori.*

### Summary of Invention

### Technical Problem

However, the conventional conductive polymer fibers had a problem in that when washing is repeated, the conductive polymer on the surface peels off and the conductivity decreases. Also, the conventional conductive polymer fibers were not sufficient in conductivity and further improvement was desired.

The present invention was made based on such a problem and an object thereof is to provide a conductive polymer conductor that enables wash durability and conductivity to be improved and a method for manufacturing the same.

### Solution to Problem

A conductive polymer conductor according to the present invention has a conductive polymer adhered to a substrate, wherein the substrate is constituted of silk or synthetic fibers and the conductive polymer is amorphous poly(3,4-ethylenedioxythiophene) added with an iron salt of p-toluenesulfonic acid as an oxidizing agent and a dopant.

A method for manufacturing a conductive polymer conductor according to the present invention is a method for manufacturing a conductive polymer conductor with which an conductive polymer constituted of amorphous poly(3,4-ethylenedioxythiophene) added with an iron salt of p-toluenesulfonic acid as an oxidizing agent and a dopant is adhered to a substrate and is a method where a mixed solution containing ethanol, which is a solvent, the iron salt of p-toluenesulfonic acid, and a monomer of the poly(3,4-ethylenedioxythiophene) is coated onto the substrate and the monomer of the poly(3,4-ethylenedioxythiophene) is polymerized by the iron salt of p-toluenesulfonic acid at ordinary temperature without heating.

### Advantageous Effects of Invention

According to the conductive polymer conductor of the present invention, the conductive polymer is arranged to be amorphous and therefore, the conductive polymer can be adhered uniformly to the substrate. Adhesion of the substrate and the conductive polymer can thus be improved and wash durability and conductivity can be improved.

Also, with the conductive polymer, by arranging such that the monomer of the conductive polymer is polymerized by the oxidizing agent and using ethanol as the solvent at ordinary temperature without heating, the amorphous conductive polymer can be adhered readily.

Further, an even higher effect can be obtained by setting a proportion of the oxidizing agent and the monomer of the conductive polymer (oxidizing agent: monomer of conductive polymer) as a volume ratio within a range of 40:1 to 40:5.

### Brief Description of Drawings

[FIG. 1] shows diagrams representing general arrangements of a conductive polymer conductor according to an embodiment of the present invention.
[FIG. 2] is a characteristic diagram showing resistance values of conductive polymer conductors according to Reference Example 1-1 and Example 1-2 and Comparative Example 1-1.
[FIG. 3] is a characteristic diagram showing electric conductivities of the conductive polymer conductors according to Reference Example 1-1 and Example 1-2 and Comparative Example 1-1.
[FIG. 4] shows electron micrographs representing a surface state of the conductive polymer conductor according to Example 1-2.
[FIG. 5] is an X-ray diffraction diagram representing crystallinity of a conductive polymer according to Example 1-2.
[FIG. 6] shows electron micrographs representing a surface state of the conductive polymer conductor according to Comparative Example 1-1.
[FIG. 7] is a characteristic diagram showing variations in resistance value according to number of times of washing of conductive polymer conductors according to Examples 2-1 to 2-5 and Comparative Example 2-2.
[FIG. 8] is a characteristic diagram showing variations in resistance value according to number of times of washing of conductive polymer conductors according to Examples 3-1 to 3-5.
[FIG. 9] is a characteristic diagram showing variations in resistance value according to number of times of washing of conductive polymer conductors according to Examples 4-1 to 4-3.
[FIG. 10] is a characteristic diagram showing resistance values of conductive polymer conductors according to Examples 5-1 to 5-5.
[FIG. 11] is a characteristic diagram showing electric conductivities of the conductive polymer conductors according to Examples 5-1 to 5-5.

### Description of Embodiments

An embodiment of the present invention shall now be described in detail with reference to the drawings.

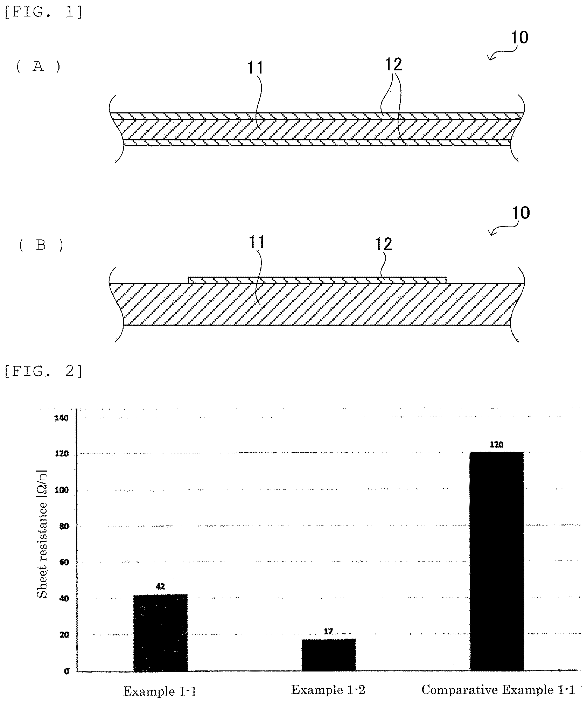

FIG. 1 represents general arrangements of a conductive polymer conductor 10 according to the embodiment of the present invention. The conductive polymer conductor 10 has a conductive polymer 12 adhered to a substrate 11 and can be used, for example, as a conductive polymer electrode.

A thread shape, fabric shape, or sheet shape can be cited as preferable examples of a shape of the substrate 11. A material constituting the substrate 11 are fibers and, specifically, those including at least one type among a group constituted of silk and synthetic fibers are used. This is because such materials are excellent in productivity and flexibility. Here, if the substrate 11 has a thread shape, although the conductive polymer conductor 10 of thread shape with the conductive polymer 12 adhered to the substrate 11 may be used as it is, it may also be used upon being formed to a fabric shape or sheet shape.

Poly(3,4-ethylenedioxythiophene) (hereinafter referred to as PEDOT) is used as the conductive polymer 12. The conductive polymer 12 may be formed on an entire surface or may be formed on a portion of the substrate 11. For example, it may be formed on the entire surface of the substrate 11 as shown in FIG. 1 (A) if the substrate 11 is of thread shape or it may be formed on one surface as shown in FIG. 1 (B) or, although not illustrated, may be formed on both surfaces if the substrate 11 is of fabric shape or sheet shape. Also, the conductive polymer 12 may be permeated into a surface of the substrate 11 while being adhered to the surface of the substrate 11.

The conductive polymer 12 has an amorphous state. From before, it has been reported that a conductive polymer material such as PEDOT, etc., is a crystal substance (see, for example, Non Patent Literatures 1 to 3). On the other hand, with the conductive polymer conductor 10 of the present embodiment, the conductive polymer 12 is made amorphous to enable it to be adhered uniformly to the substrate 11 and thereby be improved in adhesion to the substrate 11.

In the present description, that the conductive polymer 12 is low-crystalline is defined as follows using an X-ray diffraction method. X-ray diffraction is performed on the conductive polymer conductor 10 with which the conductive polymer 12 is adhered to the substrate 11, a ratio of an intensity of a crystalline peak of the conductive polymer 12 and an intensity of a crystalline peak of the substrate 11 is determined from an obtained X-ray pattern, and the conductive polymer 12 is deemed to be low-crystalline if the intensity ratio of its crystalline peak intensity with respect to the crystalline peak intensity of the substrate 11 (intensity of crystalline peak of conductive polymer 12/intensity of crystalline peak of substrate 11) is not more than 1/10.

As the crystalline peak of the conductive polymer 12, the intensity of a crystalline peak appearing in a vicinity of 2θ=25 degrees is measured. That is, for a PEDOT-based conductive polymer, a crystalline peak based on a (020) plane appears in a vicinity of 2θ=25 degrees and therefore, the intensity of this crystalline peak is measured. As the crystalline peak of the substrate 11, for example, the intensity of a crystalline peak appearing in a vicinity of 2θ=20 degrees is measured. For example, if the substrate 11 is silk, a crystalline peak based on a β phase of silk appears in a vicinity of 2θ=20 degrees and therefore, the intensity of this crystalline peak is measured. Also, a proportion of the conductive polymer 12 in the conductive polymer conductor 10 is preferably set, for example, to 5 mass % to 20 mass %.

The conductive polymer conductor 10 has a high conductivity and, for example, an electric conductivity of not less than 1×10⁻² S/cm can be obtained and further, an electric conductivity of not less than 0.3 S/cm and even further, not less than 1.0 S/cm can also be obtained. With a conventional conductive polymer conductor, for example, with that with which a conductive polymer is adhered to a substrate constituted of fibers, it has been reported that an electric conductivity of approximately 4.7×10⁻³ S/cm to 5.1×10⁻³ S/cm was obtained (see, for example, Non Patent Literature 4). That is, with the conductive polymer conductor 10 of the present embodiment, a high electric conductivity can be obtained in comparison to before.

The conductive polymer conductor 10 can be manufactured by polymerizing a monomer of the conductive polymer 12 by an oxidizing agent and using ethanol as a solvent and adhering the amorphous conductive polymer 12 to the substrate 11. By thus using ethanol as the solvent, the amorphous conductive polymer 12 can be adhered readily.

Specifically, a mixed solution containing the monomer of the conductive polymer 12, the oxidizing agent, and ethanol, which is the solvent, is coated onto the substrate 11, the monomer of the conductive polymer 12 is polymerized by action of the oxidizing agent, and the conductive polymer 12 is adhered to the substrate 11. Also, for example, after coating a raw material solution containing the monomer of the conductive polymer 12 onto the substrate 11, an oxidizing agent solution containing the oxidizing agent and ethanol, which is the solvent, may be coated thereon to polymerize the monomer of the conductive polymer 12 by the action of the oxidizing agent and adhere the conductive polymer 12 to the substrate 11. Here, the mixed solution containing the monomer of the conductive polymer 12, the oxidizing agent, and ethanol, which is the solvent, or the oxidizing agent solution containing the oxidizing agent and ethanol, which is the solvent, are further be made to contain a dopant for making the conductive polymer express conductivity and may further contain a thickener.

An iron salt is used as the oxidizing agent. p-toluenesulfonic acid is used as the dopant, and since an iron salt of p-toluenesulfonic acid (hereinafter referred to as pTS) is used, this can be made to function as the oxidizing agent and the dopant. The thickener is for increasing viscosity of the solution for manufacture to suppress spreading of the solution for manufacture upon coating, decrease bleeding of the conductive polymer, and promote the polymerization reaction of the monomer. As the thickener, that which does not react to the polymerization reaction of the conductive polymer is preferable, and glycerol, polyethylene glycol, gelatin, or a polysaccharide can be cited as a preferable example.

A proportion of the oxidizing agent and the monomer of the conductive polymer 12 (oxidizing agent : monomer of conductive polymer 12) is set as a volume ratio preferably within a range of 40:1 to 40:5, more preferably within a range of 40:2 to 40:5, and even more preferably within a range of 40:2 to 40:3. This is because, within this range, conductivity and wash durability can be more improved. Also, a proportion of the oxidizing agent with respect to a total of ethanol and the oxidizing agent (oxidizing agent/oxidizing agent + ethanol) as a mass % is preferably set within a range of 12 mass % to 60 mass % and more preferably set within a range of 20 mass % to 30 mass %. This is because, within this range, the conductivity can be more improved.

In polymerizing the monomer of the conductive polymer 12, it is performed by reaction at ordinary temperature without heating. This is because the conductivity can be more improved when heating is not performed.

As described above, according to the present embodiment, the conductive polymer 12 is arranged to be amorphous and therefore, the conductive polymer 12 can be adhered uniformly to the substrate 11. Adhesion of the substrate 11 and the conductive polymer 12 can thus be improved and the wash durability and the conductivity can be improved. For example, an electric conductivity of not less than 1×10⁻² S/cm can be obtained.

Also, with the conductive polymer, by arranging such that the monomer of the conductive polymer is polymerized by the oxidizing agent and using ethanol as the solvent, the amorphous conductive polymer can be adhered readily.

Further, an even higher effect can be obtained by setting the proportion of the oxidizing agent and the monomer of the conductive polymer (oxidizing agent : monomer of conductive polymer) as a volume ratio within a range of 40:1 to 40:5.

### Examples

### (Reference Example 1-1 and Example 1-2)

Silk fabric was prepared as the substrate 11 and a mixed solution of a monomer solution of PEDOT (Heraeus Clevios M-V2), pTS (Heraeus Clevios C-B40V2), which is the oxidizing agent and the dopant, and ethanol, which is the solvent, was coated on and maintained for 1 hour to polymerize the monomer of PEDOT. The proportion of pTS and the monomer of PEDOT was set as a volume ratio to 40:2, and the proportion of the oxidizing agent with respect to the total of ethanol and the oxidizing agent was set to 30 mass %. Also, polymerization of the monomer of PEDOT was performed upon heating to 55°C with Example 1-1 and was performed at room temperature without heating with Example 1-2. The conductive polymer conductors 10 were thereby obtained.

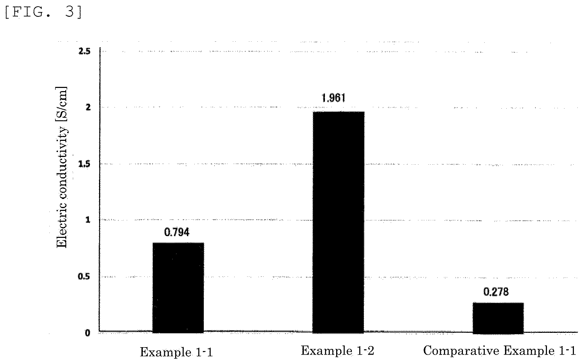

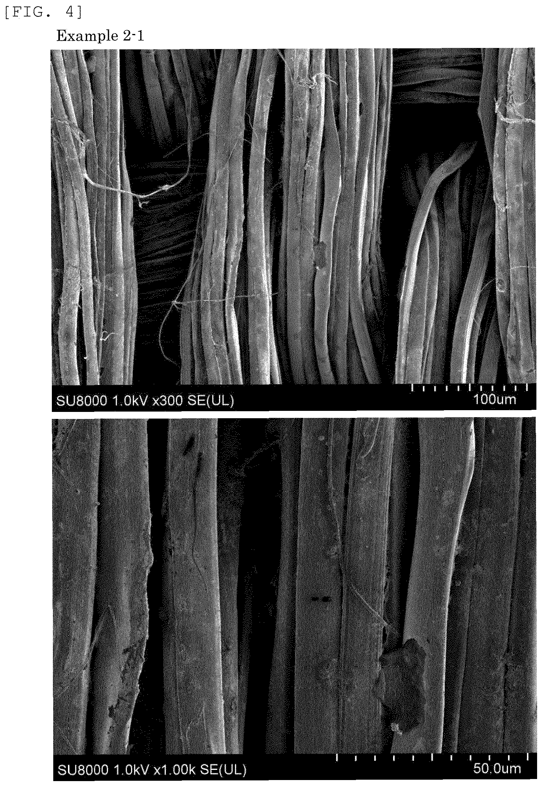

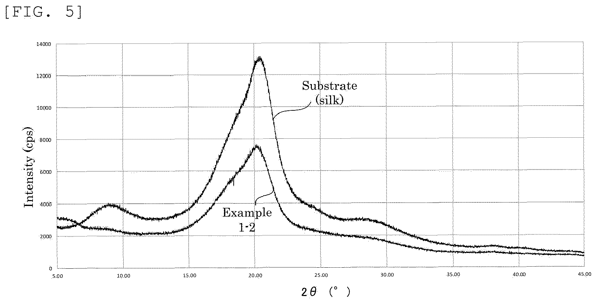

With each conductive polymer conductor 10 obtained, surface resistance was measured at each of three points separated by 8 mm. Loresta-AX MCP-T370 manufactured by Mitsubishi Chemical Analytech was used as a measurement device . The results of sheet resistance are shown in FIG. 2. Also, electric conductivities were calculated from the sheet resistance values obtained. The electric conductivity results are shown in FIG. 3. Further, for the conductive polymer conductor 10 of Example 1-2, observation of surface state by an electron microscope was performed and X-ray diffraction was performed to examine the crystallinity of the conductive polymer 12. The electron micrographs are shown in FIG. 4 and the X-ray diffraction result is shown in FIG. 5. A result of X-ray diffraction of the silk used in the substrate 11 as a basic state in which the conductive polymer 12 is not adhered is also shown in FIG. 5.

As Comparative Example 1-1 with respect to Reference Example 1-1 and Example 1-2, a conductive polymer conductor was prepared in the same manner as in Reference Example 1-1 and Example 1-2 besides the exceptions of using butanol in place of ethanol as the solvent and setting a heating temperature in polymerizing the monomer of PEDOT to 80°C. As with Reference Example 1-1 and Example 1-2, measurement of surface resistances, calculation of electric conductivities, and observation of surface state were performed for Comparative Example 1-1 as well. The obtained results are shown in FIG. 2, FIG. 3, and FIG. 6.

As shown in FIG. 2 and FIG. 3, with Reference Example 1-1 and Example 1-2 with which ethanol was used as the solvent, the resistance values could be made low and the electric conductivities could be made high in comparison to Comparative Example 1-1 with which butanol was used. Comparing Example 1-1 and Example 1-2 with which ethanol was used as the solvent, the resistance value could be made lower and the electric conductivity could be made higher by not performing heating during polymerization.

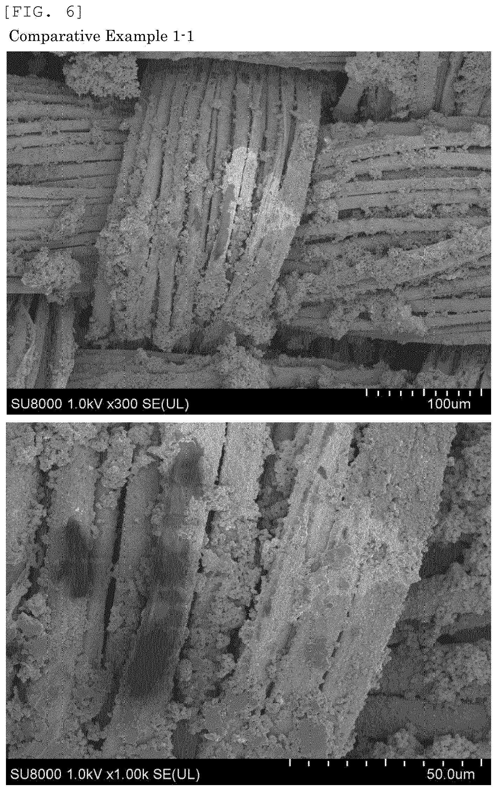

Also, as shown in FIG. 4 and FIG. 6, it can be understood from a comparison of the surface states of Example 1-2 and Comparative Example 1-1 that, whereas Example 1-2 is extremely smooth and has the conductive polymer 12 adhered uniformly, Comparative Example 1-2 has unevenness and adhesion is non-uniform. Further, as shown in FIG. 5, the diffraction pattern of Example 1-2 was substantially the same in shape as that of the silk used in the substrate 11 and a crystalline peak based on the (020) plane of PEDOT was not seen in the vicinity of 2θ=25 degrees, and the intensity ratio of the crystalline peak intensity of the conductive polymer 12 (crystalline peak intensity based on the (020) plane of PEDOT in the vicinity of 2θ=25 degrees) with respect to the crystalline peak intensity of the substrate 11 (crystalline peak intensity based on the β phase of silk in the vicinity of 2θ=20 degrees) (intensity of crystalline peak of conductive polymer 12/intensity of crystalline peak of substrate 11) was not more than 1/10. It was thus found that the conductive polymer 12 of Example 1-2 is amorphous.

From these results, it was found that, by making the conductive polymer 12 amorphous, the conductivity can be improved. Also, it was found that the conductive polymer 12 can be made amorphous by using ethanol as the solvent. Further, it was also found that, by using ethanol as the solvent and by polymerizing without heating, the conductivity can be made even higher.

### (Examples 2-1 to 2-5)

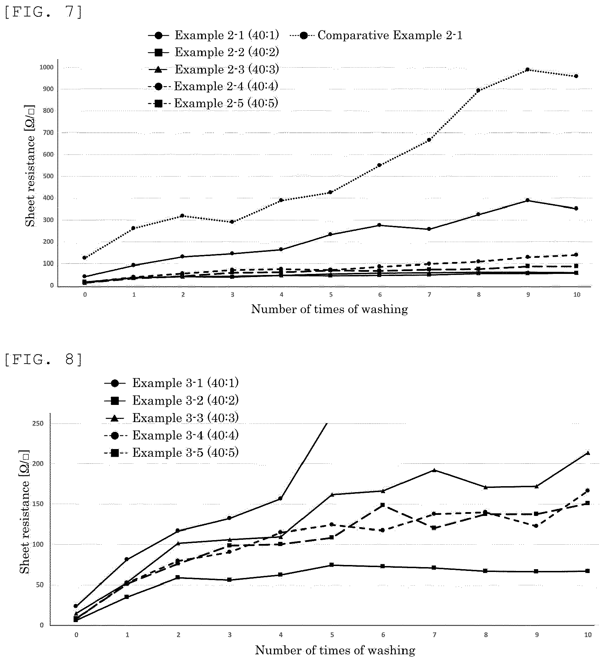

Besides the exception of varying the proportion of pTS and the monomer of PEDOT, the conductive polymer conductors 10 were prepared in the same manner as in Example 1-2. The proportion of pTS and the monomer of PEDOT was set as a volume ratio to 40:1 in Example 2-1, 40:2 in Example 2-1, 40:3 in Example 2-3, 40: 4 in Example 2-4, and 40:5 in Example 2-5. With each Example, washing was performed from 1 time to 10 times and the surface resistances were measured in the same manner as in Example 1-2 before washing (that is, at the washing of the 0th time) and after each washing to examine variations in resistance due to washing. The obtained results are shown in FIG. 7.

As Comparative Example 2-1 with respect to Examples 2-1 to 2-5, a conductive polymer conductor was prepared in the same manner as in Example 1-2 besides the exceptions of using butanol in place of ethanol as the solvent and setting the heating temperature in polymerizing the monomer of PEDOT to 80°C. That is, a conductive polymer conductor was prepared in the same manner as in Comparative Example 1-1. As with Examples 2-1 to 2-5, the surface resistances were measured to examine the variations in resistance due to washing for Comparative Example 2-1 as well. The obtained results are shown together in FIG. 7.

As shown in FIG. 7, with the present Examples using ethanol as the solvent, the conductivities and the wash durabilities could be improved in comparison to Comparative Example 2-2 using butanol as the solvent. Also, comparably excellent results were obtained for the cases with the proportions of the oxidizing agent and the monomer of the conductive polymer 12 (oxidizing agent : monomer of conductive polymer 12) being 40:2 and 40:3 as volume ratios. That is, it was found that the proportion of the oxidizing agent and the monomer of the conductive polymer 12 (oxidizing agent : monomer of conductive polymer 12) is set as a volume ratio preferably within the range of 40:1 to 40:5, more preferably within the range of 40:2 to 40:5, and even more preferably within the range of 40:2 to 40:3.

### (Examples 3-1 to 3-5 and 4-1 to 4-3)

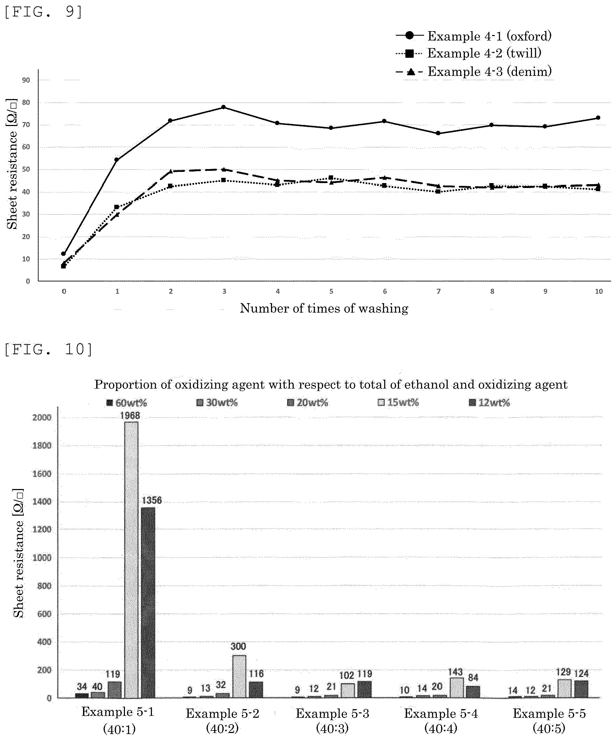

With Examples 3-1 to 3-5, besides the exception of changing the substrate 11 to a polyester-based fabric, the conductive polymer conductors 10 were prepared in the same manner as in Examples 2-1 to 2-5. In this process, the proportion of pTS and the monomer of PEDOT was varied in the same manner as in Examples 2-1 to 2-5. Also, with Examples 4-1 to 4-3, besides the exceptions of using cotton fabrics as the substrates 11 and changing the type of fabric with each Example, the conductive polymer conductors 10 were prepared in the same manner as in Example 2-2. The type of fabric was oxford in Example 4-1, twill in Example 4-2, and denim in Example 4-3. The proportion of pTS and the monomer of PEDOT was set as a volume ratio to 40:2. With each Example, the surface resistances were measured in the same manner as in Examples 2-1 to 2-5 to examine the variations in resistance due to washing. The obtained results are shown in FIG. 8 and FIG. 9.

As shown in FIG. 8 and FIG. 9, even when the material of the substrate 11 was changed, results comparable to those of Examples 2-1 to 2-5 (see FIG. 7) were obtained. That is, it was found that, by using ethanol as the solvent, high characteristics could be obtained even when silk is not used as the substrate 11.

### (Examples 5-1 to 5-5)

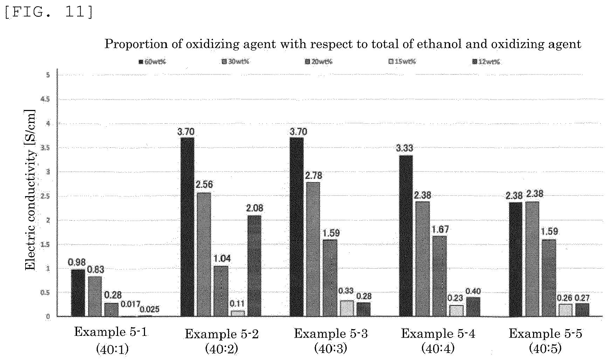

With Examples 5-1 to 5-5, besides the exceptions of varying the proportion of pTS and the monomer of PEDOT and further varying the proportion of the oxidizing agent with respect to the total of ethanol and the oxidizing agent in each Example, the conductive polymer conductors 10 were prepared in the same manner as in Example 1-2 and in the same manner, the surface resistances were measured and the electric conductivities were calculated. In this process, the proportion of pTS and the monomer of PEDOT was varied in Examples 5-1 to 5-5 in the same manner as in Examples 2-1 to 2-5 and in each Example, the proportion of the oxidizing agent with respect to the total of ethanol and the oxidizing agent was varied such as to be 60 mass %, 30 mass %, 20 mass %, 15 mass %, and 12 mass %. The obtained results are shown in FIG. 10 and FIG. 11. In FIG. 10 and FIG. 11, the results for 60 mass %, 30 mass %, 20 mass %, 15 mass %, and 12 mass % are shown in that order from the left side for each Example. FIG. 10 shows the resistance value results and FIG. 11 shows the electric conductivity results.

As shown in FIG. 10 and FIG. 11, it was found that the proportion of the oxidizing agent with respect to the total of ethanol and the oxidizing agent (oxidizing agent/oxidizing agent + ethanol) as a mass % is preferably set within the range of 12 mass % to 60 mass % and more preferably set within the range of 20 mass % to 30 mass %.

Although the present invention has been described above by way of the embodiment, the present invention is not restricted to the above embodiment and can be modified variously. For example, although with the embodiment described above, the respective constituents were also described specifically, not all of the constituents have to be included and other constituents may be included as well.

### Industrial Applicability

In recent years in Japan, the aging of population is progressing and for health condition monitoring and elongation of healthy life expectancy, development of wearable devices for detecting bio-information such as electrocardio data (information that is to be the basis of an electrocardiogram; the same applies hereinafter), myoelectric data, etc., by casual sensing to enable prevention of disease and injury as well as early discovery of disease is being pursued. However, in measuring electrocardio data, etc., it was conventionally necessary to make measurements upon applying a gel or a viscous seal or to press strongly with a belt and therefore, attachment over a long time was difficult. Also, although a disposable seal, etc., is used as a substitute, there is discomfort during attachment and problems such as skin roughening, etc., occur at times.

Also, although conventionally, an arrangement coated mainly with Ag metal is generally used, there is concern for adverse effects on the living body. Further, there was also a problem in that an electrode deteriorates in performance due to becoming oxidized by moisture and sweat. That is, it is desired that an electrode be such as not to have an adverse effect on a living body even when used continuously over a long time.

According to the present invention, for example, by coating a mixed solution containing the monomer of the conductive polymer, the oxidizing agent, and ethanol, which is the solvent, on a surface of a commercially available underwear and polymerizing by a chemical reaction, the underwear can be made to have a function of conductivity. The electrode is capable of measuring without having to be pressed strongly against a living body and the underwear can be manufactured and bio-information can be detected at lower cost than with conventional products. If the price of the wear becomes low, it can be applied widely in support robots for healthcare and nursing, support robots for work, fitness, work clothes, etc.

### Reference Signs List

10 ... conductive polymer conductor, 11 ... substrate, 12 ... conductive polymer

## Claims

1. A conductive polymer conductor being a conductive polymer conductor with which a conductive polymer is adhered to a substrate and wherein
the substrate is constituted of silk or synthetic fibers and
the conductive polymer is amorphous poly(3,4-ethylenedioxythiophene) added with an iron salt of p-toluenesulfonic acid as an oxidizing agent and a dopant.

2. The conductive polymer conductor according to Claim 1, wherein an electric conductivity is not less than 0.3 S/cm.

3. The conductive polymer conductor according to Claim 1, wherein an electric conductivity is not less than 1.0 S/cm.

4. A method for manufacturing a conductive polymer conductor being a method for manufacturing a conductive polymer conductor with which a conductive polymer constituted of amorphous poly(3,4-ethylenedioxythiophene) added with an iron salt of p-toluenesulfonic acid as an oxidizing agent and a dopant is adhered to a substrate constituted of silk or synthetic fibers and
wherein a mixed solution containing ethanol, which is a solvent, the iron salt of p-toluenesulfonic acid, and a monomer of the poly(3,4-ethylenedioxythiophene) is coated onto the substrate and the monomer of the poly(3,4-ethylenedioxythiophene) is polymerized by the iron salt of p-toluenesulfonic acid at ordinary temperature without heating.

## Patentansprüche

1. Leitfähiger Polymerleiter, der ein leitfähiger Polymerleiter ist, mit dem ein leitfähiges Polymer an ein Substrat angeheftet ist, und wobei
das Substrat aus Seide oder synthetischen Fasern gebildet ist und
das leitfähige Polymer amorphes Poly(3,4-ethylendioxythiophen) ist, dem ein Eisensalz der p-Toluolsulfonsäure als ein Oxidationsmittel und ein Dotierungsmittel zugesetzt ist.

2. Leitfähiger Polymerleiter nach Anspruch 1, wobei die elektrische Leitfähigkeit nicht weniger als 0,3 S/cm beträgt.

3. Leitfähiger Polymerleiter nach Anspruch 1, wobei die elektrische Leitfähigkeit nicht weniger als 1,0 S/cm beträgt.

4. Verfahren zur Herstellung eines leitfähigen Polymerleiters, das ein Verfahren zur Herstellung eines leitfähigen Polymerleiters ist, bei dem ein leitfähiges Polymer, das aus amorphem Poly(3,4-ethylendioxythiophen) gebildet ist, dem ein Eisensalz von p-Toluolsulfonsäure als ein Oxidationsmittel und ein Dotiermittel zugesetzt ist, an ein Substrat, das aus Seide oder synthetischen Fasern gebildet ist, angeheftet ist und
wobei eine gemischte Lösung, die Ethanol, das ein Lösungsmittel ist, das Eisensalz der p-Toluolsulfonsäure und ein Monomer des Poly(3,4-Ethylendioxythiophens) enthält, auf das Substrat aufgetragen wird und das Monomer des Poly(3,4-Ethylendioxythiophens) durch das Eisensalz der p-Toluolsulfonsäure bei gewöhnlicher Temperatur ohne Erhitzen polymerisiert wird.

## Revendications

1. Conducteur de polymère conducteur qui est un conducteur de polymère conducteur avec
lequel un polymère conducteur est collé à un substrat et,
le substrat étant constitué de fibres de soie ou synthétiques et
le polymère conducteur étant un poly(3,4-éthylènedioxythiophène) amorphe additionné d'un sel de fer d'acide p-toluènesulfonique en tant qu'agent oxydant et d'un dopant.

2. Conducteur de polymère conducteur selon la revendication 1, une conductivité électrique n'étant pas inférieure à 0,3 S/cm.

3. Conducteur de polymère conducteur selon la revendication 1, une conductivité électrique n'étant pas inférieure à 1,0 S/cm.

4. Procédé pour la fabrication d'un conducteur de polymère conducteur qui est un procédé pour la fabrication d'un conducteur de polymère conducteur avec lequel un polymère conducteur constitué d'un poly(3,4-éthylènedioxythiophène) amorphe additionné d'un sel de fer d'acide p-toluènesulfonique en tant qu'agent oxydant et d'un dopant est collé à un substrat constitué de fibres de soie ou synthétiques et
une solution mixte contenant de l'éthanol, qui est un solvant, le sel de fer d'acide p-toluènesulfonique, et un monomère du poly(3,4-éthylènedioxythiophène) recouvrant le substrat et le monomère du poly(3,4-éthylènedioxythiophène) étant polymérisé par le sel de fer d'acide p-toluènesulfonique à température ordinaire sans chauffage.
